(19) Europäisches Patentamt
European Patent Office
Office européen des brevets

(11) Publication number: 0 075 765
B1

(12) **EUROPEAN PATENT SPECIFICATION**

(45) Date of publication of patent specification: 26.02.86

(51) Int. Cl.[4]: C 08 L 67/06, C 08 K 3/20, C 08 K 3/40, C 08 K 7/02

(21) Application number: 82108379.7

(22) Date of filing: 10.09.82

# (54) Polyester molding compositions.

(30) Priority: 11.09.81 US 301324

(43) Date of publication of application:
06.04.83 Bulletin 83/14

(45) Publication of the grant of the patent:
26.02.86 Bulletin 86/09

(84) Designated Contracting States:
AT BE CH DE FR GB IT LI LU NL SE

(56) References cited:
DD-A- 44 195
DE-A-3 005 411
DE-B-2 104 575
US-A-4 172 059

PATENT ABSTRACTS OF JAPAN VOL.2, NO.105, 30 AUGUST1978 PAGE 1919C78

The file contains technical information submitted after the application was filed and not included in this specification

(73) Proprietor: UNION CARBIDE CORPORATION
39 Old Ridgebury Road
Danbury Connecticut 06817 (US)

(72) Inventor: Atkins, Kenneth Earl
1311 Martha Road
South Charleston West Virginia 25303 (US)
Inventor: Gandy, Raymond Cornelius
2629 Roosevelt Avenue
St. Albans West Virginia 25177 (US)
Inventor: Gentry, Robert Ray
111 Riverview Drive
St. Albans West Virgina 15177 (US)

(74) Representative: Barz, Peter, Dr. et al
Patentanwälte Dr. V. Schmied-Kowarzik Dipl.-Ing. G. Dannenberg Dr. P. Weinhold Dr. D. Gudel Dipl.-Ing. S. Schubert Dr. P. Barz
Siegfriedstrasse 8
D-8000 München 40 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 075 765 B1

**Description**

This invention pertains to improved polyester molding compositions and more particularly to those having improved surface characteristics.

A technical improvement that has made a significant contribution to commercial polyester molding technology is the use of low profile additives to reduce shrinkage during the curing reaction, and to thereby improve dimensional stability and surface smoothness. Low profile additives are thermoplastic polymers such as vinyl acetate polymers, polystyrene, acrylic polymers, and polycaprolactones. There are a number of theories that seek to explain the low profile or anti-shrinkage action of these polymers, but the one that seems to best explain the phenomenon is the following:

The low profile additive is at least partly soluble in the uncured polyester/styrene solution. As the polyester/styrene mixture crosslinks, the thermoplastic polymer becomes incompatible or less soluble and at least partly comes out of solution. This action causes a volume expansion that compensates for the shrinkage that occurs when the polyester/styrene mixture crosslinks.

The development of low-profile unsaturated polyester compounds has led to a wide acceptance of these materials by the transportation industry because of their good surface appearance, dimensional stability, physical properties, assembly consolidation and potential weight savings. However, as new applications developed standards have been raised making it desirable for even better surface appearance and the elimination of ripples and waviness that sometimes develop, particularly in relatively large appearance sensitive areas.

There is, therefore, a need to provide low profile unsaturated polyester compounds which afford improved surface appearance in the molded parts obtainable therefrom.

JP—A—81—092,907 describes a polyester molding composition comprising

(a) a polyester resin comprising the reaction product of an olefinically unsaturated dicarboxylic acid or anhydride and a polyol;

(b) an olefinically unsaturated monomer that is copolymerizable with said polyester resin;

(c) a thermoplastic polymer low-profile additive to control shrinkage; and

(d) an effective amount of a second crosslinkable vinyl monomer having a reactivity ratio with styrene of greater than 1

The addition of component (d) is stated to result in moldings with improved surface characteristics.

It has now been found that compositions containing an unsaturated fatty acid ester result in moldings having improved surface appearance.

The improved composition of this invention comprises:

(a) a thermosetting unsaturated polyester,

(b) an ethylenically unsaturated monomer that is copolymerizable with the polyester resin;

(c) a thermoplastic low profile additive for shrinkage control;

and is characterized in that it comprises an unsaturated fatty acid ester in an amount of 1 to 20% by weight, the thermoplastic polymer being present in an amount of 1 to 25% by weight, each amount being based on the weight of polyester, plus low profile additive plus monomer.

It has been found that the addition of a select group of materials, i.e., unsaturated fatty acid esters to low shrinking polyester molding compositions results in moldings with improved surface characteristics.

Thermosetting polyester resins suitable for use in accordance with the invention are polyester resins that are reaction products of a dicarboxylic acid or anhydride, with a polyhydric alcohol. The dicarboxylic acids or anhydrides that are employed to produce the polyester, either singly or in combination, must include those that contain olefinic unsaturation, preferably wherein the olefinic unsaturation is alpha, beta — to at least one of the carboxylic acid groups. Such acids include maleic acid or anhydride, fumaric acid, methylmaleic acid, and itaconic acid. Maleic acid or anhydride and fumaric acid are the most widely used commercially.

In addition to the olefinically unsaturated acid or anhydride, saturated and/or aromatic dicarboxylic acids or anhydrides can also be employed in producing the polyester. Such acids include phthalic acid or anhydride, terephthalic acid, hexahydrophthalic acid or anhydride, adipic acid, isophthalic acid, and "dimer" acid (i.e., dimerized fatty acids).

A polyol is also employed to produce the polyester. Such polyols include ethylene glycol, diethylene glycol, propylene glycol, dipropylene glycol, butylene glycols, neopentyl glycol, glycerol and 1,1,1-trimethylolpropane. As a rule, not more than 20 mole percent of the polyol will be a triol, with the remainder being one or more diols.

As is known in the art, polyesters that are employed in thickened molding compositions must contain residual acidity in order to enter into the thickening reaction. The nature and production of the polyesters used in such applications, such as, dicyclopentadiene modified resins are known in the art and are described in US—A—3,933,757 and 3,883,612.

Vinyl ester resins that have been advantageously employed in both bulk molding compounds (BMC) and sheet molding compounds (SMC) are resins wherein the secondary hydroxyl group formed by the interaction of an epoxide group with a carboxylic acid group has been reacted with a dicarboxylic acid anhydride to produce pendant carboxylic acid groups. A variety of saturated and unsaturated anhydrides similar to those described as useful in preparing polyester resins may be used in proportions of at least

0.1 mole of anhydride per equivalent of hydroxyl group up to an amount sufficient to react with each hydroxyl.

Thermosetting resins that are classified herein as vinyl ester resins, which contain the characteristic linkages and terminal, polymerizable unsaturated groups, are fully disclosed in US—A—3,887,515 along with the preparation of such resins and further description of these well known resins is unnecessary herein.

The curable compositions of the invention also contain a monomer that contains ethylenic unsaturation, and which is copolymerizable with the polyester and terminally unsaturated vinyl ester resins. Styrene is the preferred monomer in commercial practice today, although others can be used.

The said monomer is also employed in the resin composition for the purpose of dissolving the thermosetting resin (which is a solid at ambient temperature, i.e., about 20°—25°C.) to ensure that the resin composition is a fluid. Enough monomer is employed so that the thickness or viscosity of the fluid is such that the fluid can be processed conveniently. Excessive amounts of the monomer are normally to be avoided, because such excess can have an adverse effect on properties. For instance, too much of the monomer may tend to cause embrittlement of the cured polyester. Within these guidelines, effective proportions of the monomer are normally found within the range of from 25 to 70, and preferably from 40 to 55 weight percent, based on the weight of the polyester resin, plus monomer, plus low profile additive.

When desired a thickening agent can also be employed in the compositions of this invention. Such materials are known in the art, and include the oxides and hydroxides of the metals Group I, II and III of the Periodic Table. Illustrative examples of thickening agents include magnesium oxide, calcium oxide, calcium hydroxide, zinc oxide, barium oxide, magnesium hydroxide and mixtures of the same. Thickening agents are normally employed in proportions of from 0.1 to 6 weight percent, based upon the weight of the polyester resin, plus monomer, plus low profile additive.

Alternatively a dual thickening system may be employed wherein, for example, a metallic oxide or hydroxide and polyisocyanate in amounts of polyisocyanate sufficient to react with at least thirty percent of the hydroxyl groups but not more than one hundred and five percent of the hydroxyl groups present and an amount of metallic oxide or hydroxide sufficient to react with at least thirty percent of the carboxyl groups but not more than seventy-five percent of the carboxyl groups present. Reference is made to BE—A—849,135 for a description of such dual thickening systems.

An essential component of the compositions of this invention are thermoplastic low profile additives. The low profile additives useful in this invention are e.g. thermoplastic polymers of vinyl acetate, saturated thermoplastic polyesters, and mixtures of the same, or thermoplastic polyalkyl methacrylate polymers.

Suitable thermoplastic vinyl acetate polymer low profile additives include poly(vinyl acetate) homopolymers and thermoplastic copolymers containing at least 50 weight percent vinyl acetate. Such polymers include, for example, vinyl acetate hompolymer; carboxylated vinyl acetate polymers including copolymers of vinyl acetate and ethylenically unsaturated carboxylic acids, such as acrylic acid, methacrylic acid, crotonic acid, maleic acid, fumaric acid, itaconic acid or anhydrides such as maleic anhydride; vinyl acetate/vinyl chloride/maleic acid terpolymer. Reference is made to US—A—3,718,714 and GB—A—1,361,841 for descriptions of some of the suitable vinyl acetate polymer low profile additives.

The useful vinyl acetate polymer low profile additives ordinarily have molecular weights within the range of from about 10,000 to about 250,000, and preferably from about 25,000 to about 175,000. They are usually employed in proportions of from 5 to 25, and preferably from 9 to 16, weight percent, based on weight of polyester, low profile additive, plus monomer.

Suitable thermoplastic saturated polyester low profile additives are, in general, low molecular weight saturated polymers of polymerizable linear and/or cyclic esters and carboxylated saturated polymers of said polymerizable esters having at least one carboxyl group per molecule.

Polymers of linear and/or cyclic esters, including carboxylated polymers having an average of at least one carboxyl group per molecule which may be used in accordance with the present invention are those which possess a reduced viscosity of at least about 0.1, and preferably from 0.15 to 15 and higher. The preferred polymers of cyclic esters have a reduced viscosity of from 0.2 to 10.

Suitable polymers are further characterized by the following basic recurring structural Unit I

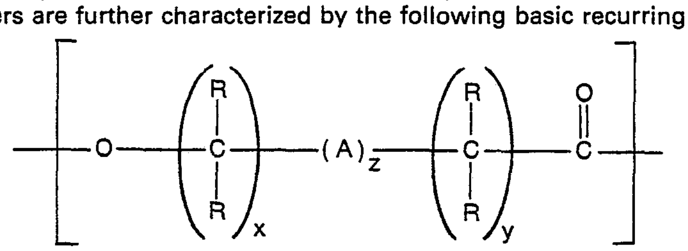

wherein each R, which can be the same or different, is hydrogen, halogen, i.e., chlorine, bromine, iodine, or fluorine, or a monovalent hydrocarbon radical generally containing a maximum of 12 carbon atoms, and preferably containing a maximum of eight carbon atoms. A is an oxy group, x is an integer having a value of 1 to 4 inclusive; y is an integer having a value of 1 to 4 inclusive; z is an integer having a value of 0 or 1, with the proviso that (a) the sum of x + y + z is 4 to 6 inclusive and (b) the total number of R variables which are substituents other than hydrogen does not exceed 2.

Illustrative of suitable monovalent hydrocarbon radicals for R are e.g. the following: alkyl radicals such as methyl, ethyl, isopropyl, n-butyl, sec-butyl, t-butyl, n-hexyl, 2-ethylhexyl, n-dodecyl, chloroethyl and chloropropyl; alkoxy radicals such as methoxy, ethoxy, n-propoxy, n-hexoxy and n-dodecoxy; aryl radicals such as phenyl, ethyl phenyl, n-propylphenyl and n-butylphenyl; aryloxy radicals such as phenoxy, n-propylphenoxy and n-butylphenoxy; cycloaliphatic radicals such as cyclopentyl or cyclohexyl.

In one embodiment, desirable polymers of cyclic esters are characterized by both basic recurring structural Unit I supra and basic recurring structural Unit II, as are obtained from a mixture containing a cyclic ester and a cyclic monomer such as ethylene oxide, propylene oxide and the like.

Unit II 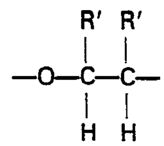

wherein each R′, is as defined for R of Unit I, or in which the two R′ variables together with the ethylene moiety of the oxyethylene chain of Unit II form a saturated cycloaliphatic hydrocarbon ring having from four to eight carbon atoms inclusive. It is preferred that recurring Unit II contains from two to twelve carbon atoms inclusive. The interconnection of Unit I and Unit II does not involve or result in the direct bonding of two oxy groups i.e., —O—O—.

Particularly preferred polymers of cyclic esters are those which are characterized by the oxypenta-methylene-carbonyl chain as seen in basic recurring structural Unit III

Unit III 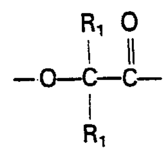

wherein each $R_1$ is hydrogen or lower alkyl, that is alkyl having a maximum of 4 carbon atoms, with the proviso that no more than three $R_1$ variables are substituents other than hydrogen.

Thermoplastic saturated polymers of linear and/or cyclic esters are well known and the carboxylated saturated esters are well known and such thermoplastic saturated polymers, and particularly polymers prepared from epsilon-caprolactones, have been advantageously employed as low profile additives. Reference, for example, is made to US—A—3,549,586 and 3,668,178 for descriptions of thermoplastic saturated polyester low profile additives and carboxylated thermoplastic saturated polyester low profile additives prepared from cyclic esters.

Also included are polyesters based on diacids, such as adipic acid, and diols, such as 1,6-hexanediol. These polyesters are described in, for example, US—A—3,909,483; 3,994,853; 3,736,278; and 3,929,868.

The thermoplastic saturated polyester low profile additives may usually be employed in the compositions of this invention in proportions similar to those of thermoplastic vinyl acetate polymers, i.e., in proportions of from 5 to 25 weight percent, and preferably from 10 to 20 weight percent, based on the weight of polyester, plus thermoplastic polymer, plus monomer.

Also suitable in certain aspects of this invention are thermoplastic polyalkyl acrylate or methacrylate low profile additives including, for example, homopolymers of methyl methacrylate, ethyl methacrylate, butyl methacrylate, methyl acrylate, ethyl acrylate; copolymers of methyl methacrylate and lower alkyl esters of acrylic and methacrylic acids, and copolymers of methyl methacrylate with minor amounts of e.g. one or more of the following: lauroyl methacrylate, isobornyl methacrylate, acrylamide, hydroxyethyl methacrylate, styrene, 2-ethylhexyl acrylate, acrylonitrile, methacrylic acid, polystyrene, styrene copolymers, such as, styrene/butadiene copolymers, cellulose acetate butyrate or alkylene oxide polymers.

Molecular weight of the alkyl acrylate or methacrylate polymers useful in the invention may vary over a wide range, from 10,000 to 1,000,000, and preferably from 25,000 to 500,000.

The thermoplastic polymer should be present in amounts ranging from 1 to 25 percent by weight, based on the weight of polyester, plus low profile additive, plus monomer, and preferably from 5 to 20 percent by weight.

An optional component of the compositions of the invention is a viscosity reducing agent. In one aspect the invention employs, generally in combination with thermoplastic vinyl acetate polymer and thermoplastic saturated polyester low profile additives, a viscosity reducing agent which is an aliphatic monocarboxylic acid having at least 6 carbon atoms.

The aliphatic monocarboxylic acid employed usually has at least 6 carbon atoms in the chain, and is frequently a saturated or unsaturated fatty acid having from 6 to 24 or more carbon atoms in the chain. Such carboxylic acids may be caproic (hexanoic), caprylic (octanoic), capric ($C_{10}$), lauric ($C_{12}$), myristic ($C_{14}$),

palmitic ($C_{16}$), palmitoleic ($C_{16}$), stearic ($C_{18}$), oleic ($C_{18}$), linoleic ($C_{18}$) or linolenic ($C_{18}$), acid, and the acids may be either straight chain or branched chain.

The viscosity reducing agent can be present in amounts ranging from 0.4 to 6 weight percent, and preferably from 1 to 4 weight percent, based on the combined weight of thermosetting resin, copolymerizable monomer, and low profile additive.

The unsaturated fatty acid esters which may be used herein include tall oil, soybean oil, linseed oil, tallates, such as 2-ethyl hexyl tallate, glycerol tallate, pentaerythritol tallate and glycerol oleate.

The unsaturated fatty acid ester is present in amounts of from 1 to 20, preferably from 2 to 8 percent, based on the weight of polyester, plus low profile additive, plus monomer.

The polyester molding composition may also contain one or more of the known types of conventional additives, which are employed for their known purposes in the usual amounts. The following are illustrative of such additives:

1. Polymerization initiators such as *t*-butyl hydroperoxide, *t*-butyl perbenzoate, benzoyl peroxide, cumene hydroperoxide and methyl ethyl ketone peroxide. The polymerization initiator is employed in a catalytically effective amount, such as from 0.3 to 2 to 3 weight percent, based on the weight of polyester plus monomer plus low profile additive;

2. Usual fillers such as clay, hydrated alumina, silica and calcium carbonate;

3. Usual reinforcing fillers such as glass fibers or fabrics, asbestos fibers or fabrics, various organic fibers or fabrics such as those made of polypropylene or acrylonitrile/vinyl chloride copolymers; and

4. Usual mold release agents or lubricants, such as zinc stearate and calcium stearate;

5. Rubbers or elastomers such as: (a) homopolymers or copolymers of conjugated dienes having a weight average molecular weight of 30,000 to 400,000 or higher as described in US—A—4,020,036. The conjugated dienes contain from 4—12 carbon atoms per molecule such as 1,3-butadiene and isoprene; (b) epihalohydrin homopolymers, a copolymer of two or more epihalohydrin monomers, or a copolymer of an epihalohydrin monomer(s) with an oxide monomer(s) having a number average molecular weight (Mn) which varies from 800 to 50,000 as described in US—A—4,101,604; (c) chloroprene polymers including homopolymers of chloroprene and copolymers of chloroprene with sulfur and/or with at least one copolymerizable organic monomer wherein chloroprene constitutes at least 50 weight percent of the organic monomer make-up of the copolymer as described in US—A—4,161,471; (d) hydrocarbon polymers including ethylene/propylene dipolymers and copolymers of ethylene/propylene and at least one nonconjugated diene, such as ethylene/propylene/hexadiene terpolymers and ethylene/propylene/1,4-hexadiene/nobornadiene, as described in US—A—4,161,471; (e) conjugated diene butyl elastomers, such as copolymers consisting of from 85 to 99.5% by weight of a $C_4$—$C_7$ iso-olefin combined with 15 to 0.5% by weight of a conjugated multi-olefin having 4 to 14 carbon atoms, copolymers of isobutylene and isoprene where a major portion of the isoprene units combined therein have conjugated diene unsaturation as described in US—A—4,160,759.

Once formulated, the compositions can be molded into thermoset articles of desired shape, particularly thermoset articles such as automobile fenders or front end panels. The actual molding cycle will, of course, depend upon the exact composition being molded as well as upon the nature of a particular cured product desired. Suitable moldings cycles are conducted at temperatures of the order of from 100°C to 182°C for periods of time ranging from 0.5 minutes to 5 minutes.

The shrinkage data molding conditions for making 30.5 × 30.5 × 0.32 cm (12 × 12 × 1/8 inch) plaques were two minutes at 148°C and 55 bar (800 psi) unless indicated otherwise.

The molding viscosities were measured on paste samples containing all of the ingredients except the fiberglass using a Brookfield HBT 5X Viscometer TF® spindle at 5 rpm.

General Procedure for Preparation of Bulk Molding Compound (BMC) Formulations

All the liquid components were weighed individually into a Hobart® mixing pan placed on a Toledo® balance. The pan was attached to a Model C—100 Hobert® mixer (in a hood). The agitator was started to slow speed, then increased to medium speed to completely mix the liquids over a period of 3—5 minutes. The agitator was then stopped and the internal mold release agent and/or fatty acid was next added to the liquid from an ice cream carton. The Hobart® mixer was restarted and the mold release agent mixed with the liquid until it was completely wet out. The filler was next added to the pan contents (agitator off) then mixed, using medium to high speed, until a consistent paste was obtained. The mixer was again stopped and the weighed amount of thickening agent was mixed into the paste over a period of 2—3 minutes, the mixer was again stopped and about 175 grams of the paste were removed from the pan (using a large spatula) and transferred to a wide-mouthed 120 ml (4 oz.) bottle. This paste sample was stored in the capped bottle at room temperature and the viscosity was measured periodically using a Model HBT 5X Brookfield Synchro-Lectric® Viscometer on a Helipath® Stand.

After removal of the paste sample, the contents were reweighed and styrene loss made up, the chopped glass fibers were added slowly (from an ice cream carton) to the pan with the mixer running on slow speed. The mixer was run for about 30 seconds after all the glass was in the paste. This short time gave glass wet out without glass degradation. The pan was then removed from the mixer and separate portions of the BMC mix of about 450 grams each were removed using spatulas and transferred to aluminum foil lying on a balance pan (balance in the hood). The mix was tightly wrapped in the aluminum

foil (to prevent loss of styrene via evaporation) and stored at room temperature until the viscosity of the retained paste sample reached molding viscosity. The weight of the BMC added to the foil varies with the molding application.

General Procedure for Preparation of Sheet Molding Compound (SMC) Formulations

All the liquid components were weighed individually into a 19 l (5 gallon) open top container placed on a Toledo® balance. The contents of the container were then mixed (in a hood) with a high speed Cowles® type dissolver. The agitator was started at a slow speed, then increased to medium speed to completely mix the liquids over a period of 2—3 minutes. The mold release agent, if one is desired, was next added to the liquids from an ice cream carton and mixed until completely dispersed. The filler was next added gradually from a tared container until a consistent paste was obtained and the contents were then further mixed to a minimum temperature of 32°C (90°F.). The thickener was next mixed into the paste over a period of 2—3 minutes, the mixer was stopped and approximately 175 grams of the paste was removed from the container and transferred to a wide-mouthed 120 ml (4 oz.) bottle. The paste sample was stored in the capped bottle at room temperature and the viscosity measured periodically using a Model HBT 5X Brookfield Synchro-Lectric® Viscometer on a Helipath® Stand.

The balance of the paste is next added to the doctor boxes on the SMC machine where it is further combined with fiber glass (approximately 2.5 cm (1") fiber). The sheet molding compound (SMC) is then allowed to mature to molding viscosity and then molded into the desired article.

Miniature Deck Lids

Miniature deck lids were designed like automobile deck lids with a 38 × 38 cm (15 × 15) inch flat area and a 7.6 cm (3 inch) draw at one end. On one side of the flat section, several ribs and bosses are included.

Visual observations of these miniature deck lids as molded and after painting with a gloss black paint enables one to compare "sink" over the ribs and bosses, craze cracking, surface smoothness, glass pattern, laking and overall moldability. The miniature deck lid mold is installed in a 1.78 · $10^6$N (200 Ton) Lawton® hydraulic press. The molds contain ejector pins for release of the molded part and are heated with circulating oil. The male core is installed in the bottom of the press and the female cavity at the top. Temperatures of the two molds are controlled separately. Pressure of the press can be varied up to 178 · $10^6$N (200 Tons) with variable time cycles so that the same part can be molded at several pressures. The speed at which the press closes can also be varied as well as the cure cycle for the molded part. All of these were varied during the molding of SMC formulations containing the surface improvers. Placement of the change pattern on the male core mold was also varied. The molded panel was allowed to cool and was then evaluated.

Description of the Materials

(The following products are Trade Names and Trade Marks of commercially available materials)

*USS—13031* A highly reactive unsaturated polyester resin believed to be ortho-phthalic anhydride modified containing approximately 40 weight percent of styrene.

*LP40A.* A commercially available product of UNION CARBIDE CORPORATION which is a copolymer of vinyl acetate and acrylic acid (40 weight percent) dissolved in styrene (60 weight percent).

*LP—1.* 35 parts of LP—40A and 4 parts of a 2/1 mixture by weight of octyl epoxytallate and vinyl acetate.

*VR—3.* A mixture of commercial fatty acids sold by Union Carbide Corporation.

*Cal White II* A calcium carbonate filler of approximately 5 μm diameter sold by Georgia Marble.

*PDI—1803.* A black pigment despersion sold by Pigment Dispersions, Inc.

*Koppers B—363—66.* An adipic acid modified polyester resin sold by Koppers Company.

*B side composition.* A composition containing 45 percent LP—90; 9.0 percent calcium oxide; 43 percent Cal White II and 3 percent PDI—1803.

*LP—2.* 35 parts of LP—40A and 4 parts of 4/1 by weight mixture of vinyl acetate and ERL 4221.

*Stypol 40—3919.* A polyester resin sold by Freeman Chemical Company.

*ERL—4221.* The following epoxy compound sold by Union Carbide Corporation

| | Epoxide No. (Eq. Wt.) | Functionality |
|---|---|---|
| 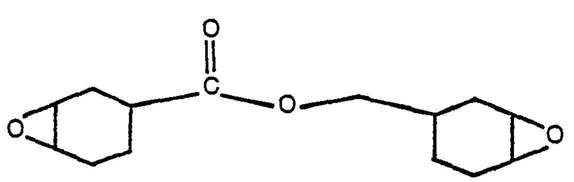 | 131—143 | 2 |

*B—2 side composition.* A composition of 20 percent

*USS—17089.* 20 percent LP—85; 2.0 percent of zinc stearate; 1.4 percent of PDI—1803; 52.85 percent of Cal White II and 3.75 percent of magnesium oxide (Merck Maglite A).

*USS—17089.* An unsaturated polyester thickener dispersion vehicle sold by USS Chemicals.

*LP—85.* A 33 weight percent solution of poly(vinyl acetate) in styrene sold by Union Carbide Corporation.

*LP—90.* A 40 weight percent solution of poly(vinyl acetate) in styrene sold by Union Carbide Corporation,

*USS—13047.* The same polyester as USS 13031 except the SPI 82°C (180°F) gel time is extended from 10 minutes to 20 minutes with additional inhibitor.

*EHT.* 2-ethylhexyl tallate.

Method of Shrinkage Measurement

A 30.5 × 30.5 × 0.32 cm (12″ × 12″ × 1/8″) flat panel is molded in a highly polished chrome plated matched metal die mold in a $6.67 \cdot 10^5$N (75 ton) Queens® Hydraulic press. The exact dimensions of the four sides of this mold are measured to the ten-thousandths of a cm at room temperature. The exact length of the four sides of the flat molded panel is also determined to the ten thousandths of a cm. These measurements are substituted into the equation below:

$$\frac{a - b}{a} = \text{cm/cm shrinkage}$$

cm/cm shrinkage × 1000 = mm/m shrinkage.

a = the sum of the lengths of the four sides of the mold.
b = the sum of the lengths of the four sides of the molded panel.

Examples 1 to 3 — Controls A and B

Bulk molding compound formulations were prepared as described above from the materials shown in Table I. The formulations were molded into 30.5 × 30.5 × 0.25 cm (12 × 12 × 0.10 inch) flat panels in a $6.67 \cdot 10^5$N (75 ton) Queens® Hydraulic press at 154/149°C (310/300°F) in 2 1/2 minutes. The shrinkage was then measured as described above. Also the surface was visually rated.

The results are shown in Table I.

TABLE I
BMC Shrinkage
Control Experiments

| Examples | A | B | 1 | 2 | 3 |
|---|---|---|---|---|---|
| USS—13031 | 65 | 65 | 65 | 65 | 65 |
| UCC—LP40A | 35 | — | 35 | 35 | 35 |
| LP—1 | — | 38 | — | — | — |
| Vinyl Acetate | — | — | — | — | 1.33 |
| EHT | — | — | 3 | 6 | 2.67 |
| VR—3 | 2 | 2 | 2 | 2 | 2 |
| Zinc Stearate | 2 | 2 | 2 | 2 | 2 |
| CalWhite II | 170 | 170 | 170 | 170 | 170 |
| t-Butylperbenzoate | 1.7 | 1.7 | 1.7 | 1.7 | 1.7 |
| PDI—1803 | 0.4 | 0.4 | 0.4 | 0.4 | 0.4 |
| 33% MgO dispersion | 3.0 | 3.0 | 3.0 | 3.0 | 3.0 |
| 0.625 cm (1/4") fiberglass wt.% Aged one day | 25 | 25 | 25 | 25 | 25 |
| Molding Viscosity, $10^6$ mPa.s | 29.6 | 25.6 | 21.6 | 20.0 | 27.2 |
| Shrinkage mm/m | +0.22 | +0.66 | +0.70 | +0.95 | +0.83 |
| Surface evaluation: 3>2>1>B>A | | | | | |

Examples 4 and 5; Control C

Sheet molding compound formulations were prepared as described above from the materials shown in Table II. The formulations were molded into miniature deck lids at about 0.23 cm (90 mils) thickness as described above in 149/143°C (300/290°F) in 2 1/2 minutes at a pressure of about 70 bar (1000 psi)

The surface smoothness was visually rated.

The results are shown in Table II.

TABLE II
SMC Experiments

| Examples | Control C | 4 | 5 |
|---|---|---|---|
| Koppers B363—66 | 64.5 | 64.5 | 64.5 |
| LP—1 | 38 | — | — |
| LP—40A | — | 34 | 34 |
| EHT | — | 2.67 | 3 |
| Vinyl Acetate | — | 1.33 | — |
| Styrene | 1.5 | 1.5 | 1.5 |
| CalWhite II | 180 | 180 | 180 |
| VR—3 | 2 | 2 | 2 |
| Zinc Stearate | 2 | 2 | 2 |
| t-butylperbenzoate | 1.7 | 1.7 | 1.7 |
| Water[1] | 0.17% | 0.17% | 0.17% |
| B Side | 11.6 | — | — |
| CaO powder | — | 1.15 | 1.15 |
| 5 cm (2") glass fiber wt.% | 27.3 | 27.0 | 27.0 |
| Molding viscosity, $10^6$ mPa.s | 12.8 | 19.2 | 17.6 |
| Surface smoothness evaluation (visual)<br>Surface evaluation: 5>4>C | | | |

[1] The "A" side was adjusted to this percentage water content.

Examples 6 and 7; Control D

Sheet molding compound formulations were prepared as described above from the materials shown in Table III. The formulations were molded into miniature deck lids at about 0.23 cm (90 mils) thickness as described above at 149/143°C (300/290°F) in 80 seconds at a pressure of about 70 bar (1000 psi).

The shrinkage was then measured as described above. Also, the surface was visually rated.

The results are shown in Table III.

TABLE III
SMC Experiments

| Examples | Control D | 6 | 7 |
|---|---|---|---|
| USS—13047 | 65 | 65 | 65 |
| LP—2 | 37 | — | — |
| LP—40A | — | 33 | 34 |
| Vinyl Acetate | — | 1.0 | — |
| EHT | — | 3.0 | 3.0 |
| CalWhite II | 170 | 170 | 170 |
| VR—3 | 1.5 | 1.5 | 1.5 |
| Zinc Stearate | 1.0 | 1.0 | 1.0 |
| t-Butylperbenzoate | 0.72 | 0.72 | 0.72 |
| t-Butylperoctoate (50%) | 1.0 | 1.0 | 1.0 |
| B—2 Side | 26.3 | 26.3 | 26/3 |
| 5 cm (2") fiberglass (wt.%) | 23.1 | 24.6 | 24.5 |
| Molding Viscosity, $10^6$ mPa.s | 16 | 12.5 | 16 |
| Shrinkage, mm/m | +0.60 | +0.98 | +0.98 |
| Surface Evaluation 7>6>D | | | |

Example 8; Control E

Sheet molding compound formulations were prepared as described above from the materials shown in Table IV. The formulations were molded into miniature deck lids at about 0.23 cm (90 mils) thickness as described above at 149/143°C (300/290°F) in 2 1/2 minutes at a pressure of about 70 bar (1000 psi).

The shrinkage was then measured as described above. Also, the surface was visually rated.

The results are shown in Table IV.

TABLE IV
SMC Experiments

| Examples | Control E | 8 |
|---|---|---|
| Stypol 40—3919 | 63 | 63 |
| Parabenzoquinone, ppm | (100) | (100) |
| LP—40A | 37 | 37 |
| EHT | — | 4 |
| CalWhite II | 180 | 180 |
| Zinc Stearate | 2 | 2 |
| VR—3 | 2 | 2 |
| t-Butylperbenzoate | 1.7 | 1.7 |
| Water, %[1] | 0.17 | 0.17 |
| CaO powder | 1.0 | 1.1 |
| 5 cm (2") fiberglass wt.% | 26.3 | 27.6 |
| Molding Viscosity, $10^6$ mPa.s | 28.4 | 27.7 |
| Shrinkage, mm/m | +1.0 | +1.2 |
| Surface evaluation: 8>E | | |

[1] "A" side adjusted to this percentage water content.

**Claims**

1. A low profile additive composition containing a thermosetting unsaturated polyester, a thermoplastic polymer additive to control shrinkage, and an ethylenically unsaturated polymerizable monomer suitable for use in molding applications, characterized in that it comprises an unsaturated fatty acid ester in an amount of 1 to 20% by weight, the thermoplastic polymer being present in an amount of 1 to 25% by weight, each amount being based on the weight of polyester, plus low profile additive plus monomer.

2. A composition as defined in claim 1 wherein the unsaturated fatty acid ester is 2-ethylhexyl tallate, tall oil, soybean oil or linseed oil.

3. A composition as defined in claim 1 or 2 containing a thickening amount of a chemically active thickening agent.

4. A composition as defined in claim 3 wherein the thickening agent is magnesium oxide or calcium oxide.

5. A composition as defined in any of claims 1—4 wherein the low profile additive is a polyvinyl acetate, preferably a carboxylated polyvinyl acetate.

6. A composition as defined in any of claims 1—5 containing a reinforcing filler.

7. A composition as defined in claim 6 wherein the reinforcing filler is glass fiber.

8. A composition as defined in any of claims 1—7 containing a rubber or elastomer.

9. A molded article produced from the composition of any of claims 1—8.

**Patentansprüche**

1. Low profile-Additiv-Zusammensetzung, enthaltend einen hitzehärtenden ungesättigten Polyester, ein thermoplastisches Polymeradditiv zur Schrumpfungskontrolle und ein ethylenisch ungesättigtes polymerisierbares Monomer, das zur Verwendung in Formanwendungen geeignet ist, dadurch gekennzeichnet, daß sie einen ungesättigten Fettsäureester in einer Menge von 1 bis 20 Gew.-% umfaßt, wobei das thermoplastische Polymer in einer Menge von 1 bis 25 Gew.-% vorhanden ist und wobei jede dieser Mengen bezogen ist auf das Gewicht von Polyester plus Low profile-Additiv plus Monomer.

2. Zusammensetzung nach Anspruch 1, worin der ungesättigte Fettsäureester 2-Ethylhexyltallat, Tallöl, Sojaöl oder Leinöl ist.

3. Zusammensetzung nach Anspruch 1 oder 2, enthaltend eine verdickende Menge eines chemisch aktiven Eindickungsmittels.

4. Zusammensetzung nach Anspruch 3, worin das Eindickungsmittel Magnesiumoxid oder Calciumoxid ist.

5. Zusammensetzung nach irgendeinem der Ansprüche 1 bis 4, worin das Low profile-Additiv ein Polyvinylacetat, vorzugsweise ein carboxyliertes Polyvinylacetat, ist.

6. Zusammensetzung nach irgendeinem der Ansprüche 1 bis 5, enthaltend einen verstärkenden Füllstoff.

7. Zusammensetzung nach Anspruch 6, worin der verstärkende Füllstoff aus Glasfasern besteht.

8. Zusammensetzung nach irgendeinem der Ansprüche 1 bis 7, enthaltend einen Kautschuk oder ein Elastomer.

9. Formkörper, hergestellt aus der Zusammensetzung nach irgendeinem der Ansprüche 1 bis 8.

**Revendications**

1. Composition d'additif bas-profil contenant un polyester insaturé thermodurcissable, un additif polymérique thermoplastique pour limiter le retrait et un monomère polymérisable à insaturation éthylénique apte à être utilisé dans des applications de moulage, caractérisée en ce qu'elle comprend un ester d'acide gras insaturé en une quantité de 1 à 20% en poids, le polymère thermoplastique étant présent en une quantité de 1 à 25% en poids, chaque quantité étant basée sur le poids de polyester plus l'additif bas-profil plus le monomère.

2. Composition suivant la revendication 1, dans laquelle l'ester d'acide gras insaturé est le tallate de 2-éthylhexyle, le tall oil, l'huile de soja ou l'huile de lin.

3. Composition suivant la revendication 1 ou 2, contenant une quantité épaississante d'un agent épaississant chimiquement actif.

4. Composition suivant la revendication 3, dans laquelle l'agent épaississant est l'oxyde de magnésium ou l'oxyde de calcium.

5. Composition suivant l'une quelconque des revendications 1 à 4, dans laquelle l'additif bas-profil est un acétate de polyvinyle, de préférence un acétate de polyvinyle carboxylé.

6. Composition suivant l'une quelconque des revendications 1 à 5, contenant une charge de renforcement.

7. Composition suivant la revendication 6, dans laquelle la charge de renforcement est de la fibre de verre.

8. Composition suivant l'une quelconque des revendications 1 à 7, contenant un caoutchouc ou un élastomère.

9. Article moulé produit à partir de la composition suivant l'une quelconque des revendications 1 à 8.